# EUROPEAN PATENT APPLICATION

(11) **EP 4 538 299 A1**
(43) Date of publication of application: **16.04.2025**
(21) Application number: 23306737.0
(22) Date of filing: 09.10.2023
(51) Int. Cl.: C08B 30/12, C08B 30/20

(54) **DRY ROASTED RICE STARCH**

(71) Applicant: ROQUETTE FRERES, 62136 Lestrem (FR)
(72) Inventor: HASJIM, Jovin, 62400 Béthune (FR); BOCK, Solène, 59130 Lambersart (FR); PARCQ, Julien, 59000 Lille (FR); INGRET, Maxime, 62400 Béthune (FR)
(74) Representative: Plasseraud IP

(57) **Abstract**

The invention relates to a process for producing a heat-modified rice starch having heat, acid and shear resistances and of stabilized viscosity comprising the steps consisting of heating rice starch to a temperature of between 150 and 200° C for a residence time of between 0.5 h and 6 hours.

The invention also concerns a thickener or texturing agent in food applications, notably in yogurt, ketchup, salad dressings, sauces, comprising the heat-modified starch obtained according to the process of the invention.

## Description

The invention relates to the production of dry roasted rice starch, which has improved heat, acid, and shear resistances, and has stabilized viscosity following this heat treatment.

Such heat-modified starches can then be used as texturizing and thickening agents in numerous food applications, in particular as natural texturizers, especially for acidic foods and foods that need to be sheared, such as yogurt, ketchup, salad dressings, sauces, etc.

### FIELD OF THE INVENTION

Synthesized biochemically, source of carbohydrates, starch is one of the most widespread organic materials in the plant kingdom, where it constitutes organisms' nutrient reserves.

Starches have always been used in the food industry, not only as a nutritional ingredient but also for their functional properties, as a thickening agent, binder, stabilizer, or gelling agent.

For example, it is known that native starches are used in preparations that require cooking. Corn starch, in particular, forms the basis of "powders for flan".

When it is rich in amylose, it retrogrades and therefore from strong gel. Therefore, it is possible to obtain firm flans after cooking and cooling. It is also suitable for custards.

However, those cannot be used in pastries intended to be frozen since, upon defrosting, the well-known phenomenon of syneresis, which is reflected by the expulsion of water, deteriorates the texture of the custard.

Thus, in its native state, starch has limited applicability due to syneresis, and also due to:
- its low resistance to shear stresses, to heat treatments, and to acidic pH,
- its limited processability, and
- its low solubility in common organic solvents.

Thus, in order to meet today's demanding technical requirements, the properties of starch have to be optimized by various methods known as "modification".

These main modifications therefore aim to adapt the starch to the technical constraints resulting from cooking, from freezing/thawing, from appertization or sterilization, from acidic pH, and to make it compatible with modern foods (microwaves, instant meals, "high temperatures", etc.).

Starch modification therefore aims to correct one or more of the abovementioned defects, thereby improving its versatility and meeting the needs of consumers.

Techniques for modifying starch have generally been classified into four categories: physical, chemical, enzymatic, and genetic, the ultimate goal being to produce various derivatives with optimized physicochemical properties.

Chemical and physical modifications are most commonly implemented.

Chemical treatment consists of introducing new functional groups onto the starch molecules, which alters its physicochemical properties in a noteworthy manner. Indeed, such modifications of granular native starches profoundly alter their behavior in terms of gelatinization, pasting, gelling, and retrogradation.

Generally, these modifications are made by chemical derivatization, such as esterification, etherification, crosslinking, or grafting.

However, chemical modifications are less sought-after by consumers in food applications (also for environmental reasons), even if some modifications are generally recognized as safe (GRAS) for human consumption.

Various physical modifications are thus proposed, for example:
- heat moisture treatment (HMT), consisting of treating the starch at controlled moisture levels (typically 22-27%) and at high temperature, for 16 hours or more, in order to alter the structure and physicochemical properties of the starch;
- annealing, consisting of treating the starch in an excess of water at temperatures below the gelatinization temperature, in order to come close to the glass transition temperature;
- high-pressure processing (HPP), by means of which the amorphous regions of the starch granule are hydrated, leading to a distortion of the crystalline parts of the granule and promoting the accessibility of said crystalline regions to water;
- glow discharge plasma treatment, which generates, at ambient temperature, highenergy electrons and other highly active species. Applied to the starch, these active species excite the chemical groups in the starch and cause significant crosslinking of the macromolecules;
- osmotic pressure treatment (OPT), carried out in the presence of solutions with a high content of salts. The starch is suspended in a saturated salt solution (high osmotic pressure) and then exposed to high temperature. The treatment increases the gelatinization temperature of starch significantly. It also alters the crystalline structure of starches with the B-type crystallinity, such as potato starch, to the A-type crystallinity;
- "dry heating" treatment (DHT), consisting of treating the starch at high temperature, typically between 100 and 150°C, with reduced moisture (<10%);
- "thermal inhibition" treatment. Generally, thermal inhibition means dehydrating a starch until it reaches the anhydrous or substantially anhydrous state (i.e. <1% moisture), then a heat treatment at above 100°C for a sufficient period of time to "inhibit" the starch, in this case to afford the properties of crosslinked starches. Moreover, it is necessary to condition the starch under pH conditions, which are at least neutral to preferentially alkaline, before carrying out the step of forced dehydration.

An alternative to "thermal inhibition" treatment has been proposed in the solvent phase and consists of heating a non-pre-gelatinized granular starch in an alcohol-based medium in the presence of a base and salts at a temperature of 120 to 200°C for 5 minutes to 2 hours.

Regardless, the thermal inhibition process thus leads to obtaining a starch paste having properties of increased resistance to viscosity breakdown and a non-cohesive texture.

In this particular technical field, mention may more particularly be made of U.S. Pat. No. 6,221,420, which describes a thermally inhibited starch obtained by dehydration then heat treatment.

The main steps are:
- dehydration of the starch to anhydrous or substantially anhydrous state (<1% moisture), then
- heat treatment of the dry starch thus obtained, at between 100 to 180 °C for a duration of up to 20 hours.

Before the step of dehydrating the starch, it is recommended to perform a step of alkalinization of the starch to bring the pH of the starch to a value of between 7 and 10, preferably of between 8 and 10.

At this stage, before the step of forced dehydration, which precedes the inhibition step, the water content of the starch (as demonstrated by way of examples) is between 8 and 10%.

US 2001/0017133 describes a similar method, in which the starch is also dehydrated thermally or non-thermally to anhydrous or substantially anhydrous (i.e. <1% moisture), followed by the inhibition process at a temperature of more than 100 °C, preferentially of between 120 and 180°C.

Before the dehydration step, the conventional alkalinization step leads to a starch suspension having a pH value of neutral or greater, preferably of between 7 and 9.5, and a water content of between 2 and 15%.

A variant was proposed in patent application WO 2014/042537, which variant relates to heating an alkaline starch at temperatures of between 140 and 190 °C while ensuring that the inhibition method is initiated and carried out in the presence of a sufficient amount of water, that is more than 1% water.

In other words, this method recommends the thermal inhibition of a starch, which has been alkalinized beforehand without carrying out a forced dehydration step to anhydrous state.

The starch preparation or the starch is thus brought to a pH of between 9.1 and 11.2, preferentially around 10, and the water content is adjusted to between 2 and 22%, preferentially between 5 and 10%.

The thermal inhibition is subsequently carried out directly on this powder or this starch, at a temperature of between 140 and 190 °C, preferentially between 140 and 180 °C, for a duration of at least 30 minutes up to 3 hours.

From the foregoing, it is noted that the methods for thermal inhibition implemented in order to stabilize the viscosity of starches employ methods requiring:
- long treatment durations, i.e. up to 20 hours at temperature above 100 °C,
- adjusting pH of starch to neutral or alkaline, and/or
- controlling the water content of the starches before the thermal inhibition treatment, based on the methods proposed in the prior art, whether to values of less than 1% or alternatively of between 2 and 22%.

There is therefore a need for a novel method for inhibiting starch, making it possible to further reduce the reaction or preparation time without the need to control the water content or to adjust the pH of the starch to be "thermally inhibited".

### DESCRIPTION OF THE INVENTION

Thus, the invention relates to a method for producing a heat-modified starch comprising the steps consisting of heating rice starch to a temperature of between 150 and 200 °C, preferably at 170 °C for a residence time of between 0.5 and 6 hours, more preferentially of between 1 and 2 hours.

The rice starch may be native standard (or normal) rice starch or native waxy (or glutinous) rice starch.

Starch can be used in purified or flour form, as describes in the following examples.

The method in accordance with the invention first of all requires using a dry rice starch powder, presenting its natural moisture content at equilibrium with the relative humidity of air at room temperature.

Then, in contrast to conventional inhibition processes, there is no need for alkaline impregnation and/or for the precise control of water content prior to the heating treatment.

The next step then consists of heating the starch powder at a temperature of between 150 and 200 °C, preferably at 170 °C for a residence time of between 0.5 and 6 hours, more preferentially of between 1 and 2 hours.

The man skill in the art will recognize the process usually known as dry roasting.

To the best of the applicant's knowledge, the dry roasting technique has never been used to "inhibit" starch, i.e. to give it remarkable properties of heat, acid, and shear resistances, and of stabilized viscosity.

Indeed, as described not only in JP 2012100650 and WO 93/09145, but also in scientific papers, such as those by Srivastava et al, 1970, in Starch-Stärke, 22 (2), pp. 49-54; and Ueno et al, 1976, in Starch-Stärke, 28 (3), pp. 77-83, roasting dry starch is a common process for dextrinization (also known as pyrodextrinization) used to cleave the molecular chains in the starch granules to afford smaller structural units.

As it will be shown in one of the examples below, the Applicant found that all starches from various botanical origins, except from rice, experienced a decrease in the peak viscosity after dry-roasting treatment, which was more evident after being dry-roasted at a higher temperature or for a longer time, confirming the phenomenon of thermal degradation or dextrinization.

It is therefore surprising and unexpected to think that the dry-roasting process can be used to optimize the properties of the rice starch treated in this way.

Furthermore, it is to the Applicant's credit to find that the solution was to use a particular starch, extracted from normal or waxy rice varieties, whatever their origins.

As it will be shown below, the process according to the present invention produces heat-modified rice starch presenting increased ratio of trough to peak viscosity during the heating in demineralized water, comparing with that of the native counterpart.

More particularly, the ratio of trough to peak viscosity is more than 60%, more preferably more than 70 % and even more than 80 %.

Similar to the pasting properties in demineralized water, dry-roasting treatment also increased the ratio of trough to peak viscosity of heat-modified starch during the heating in acidic solution, comparing with that of the native counterpart.

The inhibition effect of dry-roasting treatment on normal and waxy rice starches increased the resistance of the starch granules against acid hydrolysis during heating, similar to that observed from chemically crosslinked starch.

More particularly, the ratio of trough to peak viscosity is more than 50%, more preferably more than 65 % and even more than 80 %.

In another embodiment, the rise in temperature may be carried out at the lab scale, such as using a hot air oven. It can also be performed at pilot and industrial scales, such as using a VOMM dryer, a fluidized bed dryer, or a conical dryer.

The invention also relates to a heat-modified starch that is obtained according to the method described above.

The heat-modified starches according to the invention will advantageously be used, based on their respective properties, as texturizing and thickening agents in numerous food applications, in particular as natural texturizers, especially for acidic foods and foods that need to be sheared, such as yogurt, ketchup, salad dressings, sauces, etc.

The invention will be better understood with the aid of the following examples, which are intended to be illustrative and non-limiting.

### Figures:

Fig. 1. Pasting curves of dry-roasted normal rice starches from Source 1 in demineralized water.
Fig. 2. Pasting curves of dry-roasted and chemically crosslinked waxy rice starches from Source 1 in demineralized water.
Fig. 3. Pasting curves of dry-roasted waxy rice starches from Source 2 in demineralized water.
Fig. 4. Pasting curves of dry-roasted normal rice starches from Source 1 in citric acid solution.
Fig. 5. Pasting curves of dry-roasted and chemically crosslinked waxy rice starches from Source 1 in citric acid solution.
Fig. 6. Pasting curves of dry-roasted waxy rice starches from Source 2 in citric acid solution.
Fig. 7. Pasting curves of dry-roasted normal and waxy rice flours in demineralized water.
Fig. 8. Pasting curves of dry-roasted normal and waxy rice flours in citric acid solution.
Fig. 9. Pasting curves of dry-roasted pea starches in demineralized water.
Fig. 10. Pasting curves of dry-roasted tapioca starches in demineralized water.
Fig. 11. Pasting curves of dry-roasted potato starches in demineralized water.
Fig. 12. Pasting curves of dry-roasted waxy maize starches in demineralized water.
Fig. 13. Pasting curves of dry-roasted normal maize starches in demineralized water.
Fig. 14. Pasting curves of dry-roasted pea starches in citric acid solution.
Fig. 15. Pasting curves of dry-roasted tapioca starches in citric acid solution.
Fig. 16. Pasting curves of dry-roasted potato starches in citric acid solution.
Fig. 17. Pasting curves of dry-roasted waxy maize starches in citric acid solution.
Fig. 18. Pasting curves of dry-roasted normal maize starches in citric acid solution.

### EXAMPLES

### Example 1. Dry-roasted waxy and normal rice starches.

### Starch materials

- Normal rice starch from Anhui Shunxin Shengyuan Biological Food Co., Ltd., China (Source 1).
- Waxy rice starch from Anhui Shunxin Shengyuan Biological Food Co., Ltd., China (Source 1).
- Waxy rice starch from Wuhan Meiweiyuan Bioengineering Co., Ltd., China (Source 2).
- As controls, crosslinked waxy rice starches were produced as follows:
   Starch slurry (36% w/w) was prepared using waxy rice starch from Source 1 and decarbonated water. Sodium bisulfite (100 ppm, dry starch basis - "dsb") and sodium chloride (2% w/w, dsb) were added to the starch slurry.

The pH of the slurry was adjusted to 8 using dilute sodium hydroxide solution, followed by additional 1% w/w (dsb) sodium hydroxide by slowly adding the dilute solution. The temperature was set to 35°C and maintained throughout the whole reaction. Sodium trimetaphosphate (0.6% w/w, dsb) was added to start the reaction.

The reaction was stopped after2, 4, and 6 h (for mild, medium, and high levels of chemical crosslinking, respectively) by neutralizing the pH to 6 using dilute hydrochloric solution. The resulting crosslinked starches were collected through vacuum filtration, washed with decarbonated water, and dried in a fluidized bed dryer (Retsch TG200, Germany).

### Process

### Dry roasting

Without any pretreatment or pH adjustment, native waxy or normal rice starch (25 g) was placed on an aluminum pan, and heated at 170°C for 1 or 2 h or at 190°C for 1 h.

### Analytical methods

### Pasting properties in demineralized water

The pasting analysis in demineralized water was performed using a Rapid Visco-Analyzer (RVA), Perten Instruments, Australia, to understand the resistance of starch paste against heat and shear.

Starch was mixed with demineralized water to obtain 8% w/w slurry in an aluminum canister. The slurry was heated isothermally at 50°C for 1 min, followed by heating to 92°C at a rate of 10.5°C/min (a total of 4 min), isothermal heating at 92°C for 5 min, cooling to 50°C at a rate of 10.5°C/min (a total of 4 min), and finally isothermal heating at 50°C for 11 min.

For better mixing, the stirring was started at 100 rpm, which was increased to 500 rpm and 960 rpm after 10 sec and 20 sec, respectively, and then decreased to 160 rpm after 30 sec, where it stayed constant until the end of the test.

The RVA heating profile is summarized in Table 1.

**Table 1. Analytical parameters for the pasting properties in demineralized water.**

| Time | Temperature (°C) | Stirring (rpm) |
|---|---|---|
| 00:00:00 | 50 | 100 |
| 00:00:10 | 50 | 500 |
| 00:00:20 | 50 | 960 |
| 00:00:30 | 50 | 160 |
| 00:01:00 | 50 | 160 |
| 00:05:00 | 92 | 160 |
| 00:10:00 | 92 | 160 |
| 00:14:00 | 50 | 160 |
| 00:25:00 | 50 | 160 |

The terminology of the pasting curve is as follows:
- Pasting temperature is the temperature at which the viscosity starts to develop.
- Peak viscosity is the maximum viscosity during the heating from 50°C to 92°C and during the isothermal heating at 92°C.
- Trough is the minimum viscosity during the isothermal heating at 92°C and the cooling from 92°C to 50°C.
- Final viscosity is the viscosity at the end of the measurement.
- Breakdown is the difference between peak viscosity and trough.
- Setback is the difference between final viscosity and trough.

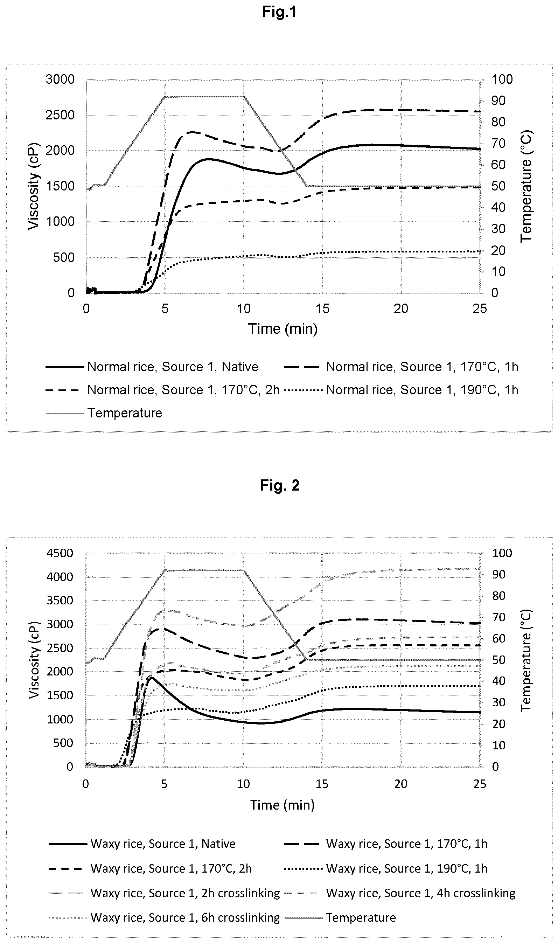

The pasting curves of dry-roasted and chemically crosslinked rice starches in demineralized water are presented in Figs. 1-3.

The pasting properties of dry-roasted and chemically crosslinked rice starches in demineralized water are given in Table 2.

**Table 2. Pasting properties of dry-roasted and chemically crosslinked rice starches in demineralized water.**

| Botanical origin | Treatment | Peak viscosity (cP) | Trough (cP) | Breakdown (cP) | Ratio¹ |
|---|---|---|---|---|---|
| Normal rice, Source 1 | Native | 1880 | 1676 | 204 | 89% |
| | 170°C, 1h | 2264 | 1992 | 272 | 88% |
| | 170°C, 2h | No peak | No trough | Less than 0 | / |
| | 190°C, 1h | No peak | No trough | Less than 0 | / |
| Waxy rice, Source 1 | Native | 1871 | 917 | 954 | 49% |
| | 170°C, 1h | 2911 | 2284 | 627 | 78% |
| | 170°C, 2h | 2041 | 1824 | 217 | 89% |
| | 190°C, 1h | 1234 | 1133 | 101 | 92% |
| | 2h crosslinking (mild) | 3298 | 2971 | 327 | 90% |
| | 4h crosslinking (medium) | 2192 | 1965 | 227 | 90% |
| | 6h crosslinking (high) | 1749 | 1612 | 137 | 92% |
| Waxy rice, Source 2 | Native | 1926 | 749 | 1177 | 39% |
| | 170°C, 1h | 1611 | 1293 | 318 | 80% |
| | 170°C, 2h | 874 | 683 | 191 | 78% |
| | 190°C, 1h | 539 | 377 | 162 | 70% |

| | | | | | |
|---|---|---|---|---|---|
| ¹Ratio = Trough/Peak viscosity | | | | | |

In general, dry-roasting treatment decreased the pasting temperatures and the breakdowns of normal and waxy rice starches, while increased their ratios of trough to peak viscosity (Figs. 1-3 and Table 2) during heating in demineralized water, comparing with those of their native counterparts, which were the starting starch materials.

The results indicated that the heat and shear resistances of the normal and waxy rice starches were improved by the inhibition effect of dry roasting. Some of the dry-roasted normal and waxy starches from Source 1 showed higher peak viscosities, troughs, and/or overall pasting viscosities than their native counterparts, similar to mildly chemically crosslinked starches (such as 2-h crosslinking in Fig. 2 and Table 2).

Mild crosslinking holds the swollen starch granules, preventing the breakage of the swollen granules during heating and shearing, and thus producing higher pasting viscosity than the native starch.

However, the overall pasting viscosity was decreased when the starch was dry-roasted at a higher temperature or for a longer time due to the higher level of thermal inhibition, which retarded the granule swelling during heating, similar to highly chemically crosslinked starches (such as 6-h crosslinking in Fig. 2 and Table 2).

In fact, two of the dry-roasted normal rice starches from Source 1 were lack of peak viscosity and trough, and hence no breakdown was observed, signifying a high resistance to heat and shear. The dry-roasted normal and waxy rice starches from Source 1 had higher ratios of trough to peak viscosity than the dry-roasted waxy rice starches from Source 2, indicating the former were more inhibited than the latter.

### Pasting properties in citric acid solution

The pasting analysis in citric acid solution was also performed using RVA to understand the resistance of starch paste against low pH or acid.

Starch was mixed with citric acid solution (pH ~3) to obtain 8% w/w slurry in a canister.

The citric acid solution contained 2.1% w/w citric acid, 0.76% w/w NaCl, and 0.277% w/w NaOH.

Each sample was heated isothermally at 50°C for 1 min, followed by heating to 92°C at a rate of 10.5°C/min (a total of 4 min), isothermal heating at 92°C for 12 min, cooling to 50°C at a rate of 14°C/min (a total of 3 min), and finally isothermal heating at 50°C for 15 sec.

For better mixing, the stirring was started at 100 rpm, which was increased to 500 rpm and 960 rpm after 10 sec and 20 sec, respectively, and then decreased to 160 rpm after 30 sec, where it stayed constant until the end of the test.

The RVA heating profile is summarized in Table 3.

**Table 3. Analytical parameters for the pasting properties in citric acid solution.**

| Time | Temperature (°C) | Stirring (rpm) |
|---|---|---|
| 00:00:00 | 50 | 100 |
| 00:00:10 | 50 | 500 |
| 00:00:20 | 50 | 960 |
| 00:00:30 | 50 | 160 |
| 00:01:00 | 50 | 160 |
| 00:05:00 | 92 | 160 |
| 00:17:00 | 92 | 160 |
| 00:20:00 | 50 | 160 |
| 00:20:15 | 50 | 160 |

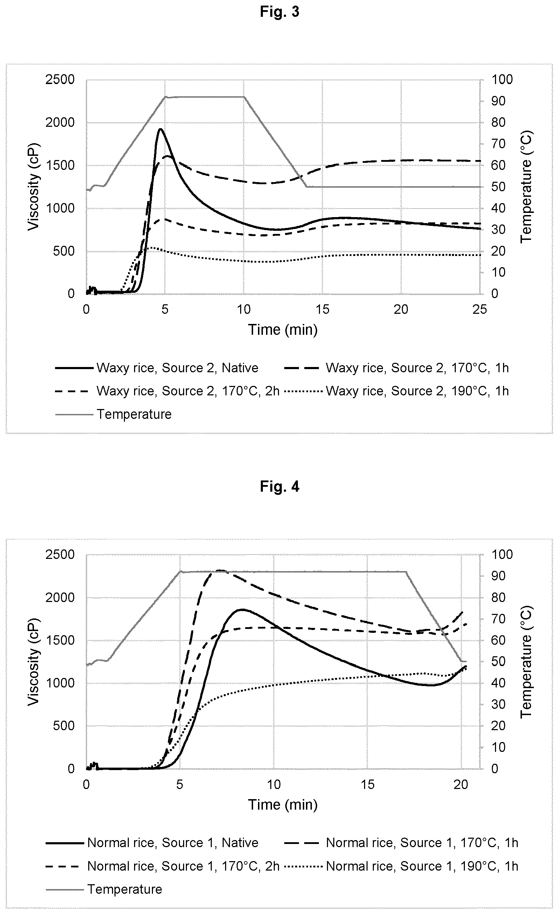

The pasting curves of dry-roasted and chemically crosslinked rice starches in citric acid solution are presented in Figs. 4 to 6.

The pasting properties of dry-roasted and chemically crosslinked rice starches in in citric acid solution are given in Table 4.

**Table 4. Pasting properties of dry-roasted and chemically crosslinked rice starches in citric acid solution.**

| Botanical origin | Treatment | Peak viscosity (cP) | Trough (cP) | Breakdown (cP) | Ratio¹ |
|---|---|---|---|---|---|
| Normal rice, Source 1 | Native | 1861 | 976 | 885 | 52% |
| | 170°C, 1h | 2318 | 1604 | 714 | 69% |
| | 170°C, 2h | 1652 | 1568 | 84 | 95% |
| | 190°C, 1h | No peak | No trough | / | / |
| Waxy rice, Source 1 | Native | 1937 | 387 | 1550 | 20% |
| | 170°C, 1h | 2949 | 1709 | 1240 | 58% |
| | 170°C, 2h | 2296 | 1881 | 415 | 82% |
| | 190°C, 1h | 1586 | 1483 | 103 | 94% |
| | 2h crosslinking (mild) | 3152 | 2451 | 701 | 78% |
| | 4h crosslinking (medium) | 2534 | 2314 | 220 | 91% |
| | 6h crosslinking (high) | 2125 | 2084 | 41 | 98% |
| Waxy rice, Source 2 | Native | 2056 | 354 | 1702 | 17% |
| | 170°C, 1h | 1605 | 842 | 763 | 52% |
| | 170°C, 2h | 866 | 464 | 402 | 54% |
| | 190°C, 1h | 509 | 223 | 286 | 44% |

Similar to the pasting properties in demineralized water, dry-roasting treatment decreased the pasting temperatures and the breakdowns of normal and waxy rice starches, while increased their ratios of trough to peak viscosity (Figs. 4-6 and Table 4) during the heating in citric acid solution, comparing with those of their native counterparts.

Acid can hydrolyze starch molecules, which rate increases with the temperature, resulting in viscosity breakdown. Therefore, small breakdown and high ratio of trough to peak viscosity signify the high stability of starch viscosity in acidic medium.

Furthermore, some of the dry-roasted starches showed higher peak viscosities, troughs, or overall pasting viscosities than their native counterparts.

The breakdown was smaller when the starch was dry-roasted at a higher temperature or for a longer time.

In fact, one of the dry-roasted normal rice starches was lack of peak viscosity and trough, and hence no breakdown was observed, signifying a high resistance to acidic pH.

The results indicated that the inhibition effect of dry-roasting treatment on normal and waxy rice starches increased the resistance of the starch granules against acid hydrolysis during heating, similar to that observed from chemically crosslinked starches.

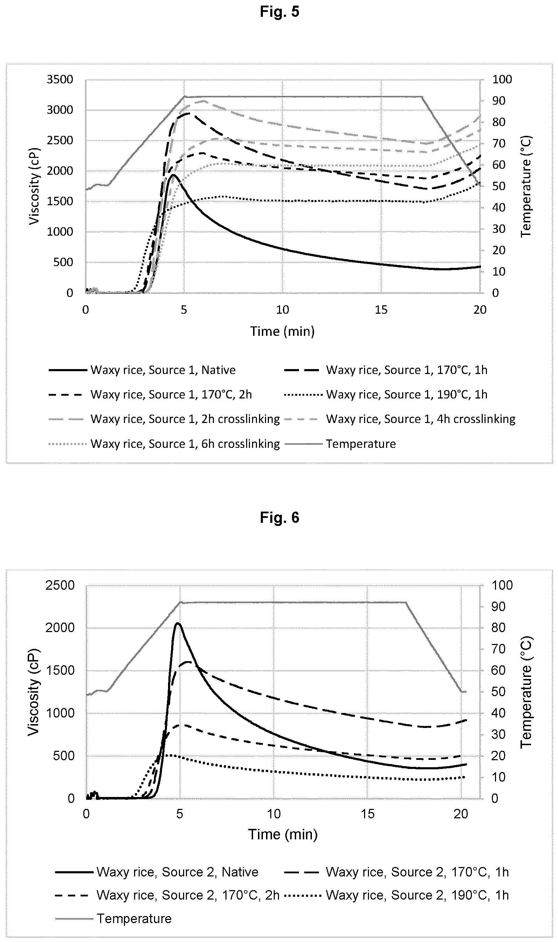

The breakdown of waxy rice starch was decreased with the increase in the degree of chemical crosslinking, while its ratio of trough to peak viscosity increased (Fig. 5 and Table 4).

The dry-roasted normal and waxy rice starches from Source 1 had higher acid resistance than the dry-roasted waxy rice starches from Source 2, indicating the former were more inhibited than the latter.

### Sedimentation test

The sedimentation test was performed to confirm that the reduction of the peak viscosity observed from the pasting properties by RVA was indeed caused by thermal inhibition, and not thermal degradation.

Starch (1.0 g dry weight) was placed in a 250-mL glass jar and mixed with 100 mL solution containing 10% w/w zinc chloride and 26% w/w ammonium chloride.

After being sealed and well mixed, the jar was heated in a boiling water bath for 10 min.

After cooling, the content of the jar was mixed well again and transferred to a 100-mL graduated cylinder.

The sedimentation volume was recorded as the percentage of total volume after the slurry had been allowed to stand for 24 h (Table 5).

**Table 5. Sedimentation volumes of dry-roasted and chemically crosslinked rice starches.**

| Botanical origin | Treatment | Sedimentation volume (%) |
|---|---|---|
| Normal rice, Source 1 | Native | 47% and cloudy |
| | 170°C, 1h | 58% |
| | 170°C, 2h | 48% |
| | 190°C,. 1h | 38% |
| Waxy rice, Source 1 | Native | No sedimentation, cloudy |
| | 170°C, 1h | 71% |
| | 170°C, 2h | 50% |
| | 190°C, 1h | 43% |
| | 2h crosslinking (mild) | 60% |
| | 4h crosslinking (medium) | 58% |
| | 6h crosslinking (high) | 41% |
| Waxy rice, Source 2 | Native | No sedimentation, cloudy |
| | 170°C, 1h | -10% sediment, -80% cloudy |
| | 170°C, 2h | -5% sediment, -85% cloudy |
| | 190°C, 1h | -3% sediment, -87% cloudy |

All native waxy rice starches only showed cloudy solution without any sedimentation, while native normal rice starch showed two layers of a white sediment at the bottom and a cloudy solution at the top (Table 5).

The cloudiness confirmed that the swollen starch granules were completely disintegrated by the heating process.

The white sediment was the swollen granules that were not disintegrated due the amylose (in normal rice starch) maintaining the integrity of the swollen starch granules.

The dry-roasted normal and waxy rice starches from Source 1 showed clear separation between the white sediment of swollen starch granules and the clear solution, suggesting limited disintegration of swollen granules although dry-roasted waxy rice starches were lack of amylose.

The sedimentation volume was smaller when the starch was dry-roasted at a higher temperature or for a longer time. This was similar to chemically crosslinked starch granules, where the higher level of crosslinking reduced sedimentation volume as it prevented the swelling of starch granules.

On the other hand, the dry-roasted waxy rice starch from Source 2 showed three layers: a small volume of white sediment at the bottom, a large volume of cloudy solution in the middle, and another small volume of clear solution at the top.

The results indicated that the dry-roasted waxy rice starches from Source 2 were more inhibited than the native starches, but less inhibited than the dry-roasted normal and waxy rice starches from Source 1, which is aligned with the pasting properties in demineralized water (Figs. 1-3 and Table 2) and in citric acid solution (Figs. 4-6 and Table 4).

### Gelatinization properties

The gelatinization properties of dry-roasted and chemically crosslinked rice starches were analyzed using a differential scanning calorimeter (DSC 8000, Perkin Elmer, USA).

Each starch sample was mixed with water to obtain 18% w/w starch suspension. The suspension (15 mg) was then placed in an aluminum pan and hermetically sealed. The pan was equilibrated at 5°C before being heated from 5°C to 110°C at 10°C/min.

The onset temperature (*T*ₒ), the peak temperature (*T*ₚ), the conclusion temperature (*T*_{c}), and the enthalpy of gelatinization (Δ*H*) were obtained from the endotherm in the DSC thermogram. Some samples also showed a shoulder before *T*ₒ and some showed a shoulder after *T*_{c}.

**Table 6. Thermal properties of dry-roasted and chemically crosslinked rice starches.**

| Botanical origin | Treatment | Gelatinization temperature (°C) | | | | | Temperature range (°C) | Δ*H* (J/g) |
|---|---|---|---|---|---|---|---|---|
| | | Shoulder before *T*ₒ | *T*ₒ | *T*ₚ | *T*_{c} | Shoulder after *T*_{c} | | |
| Normal rice, Source 1 | Native | ND¹ | 60.91 | 76.66 | 84.84 | ND | 23.93 | 15.56 |
| | 170°C, 1h | 56.36 | 61.99 | 73.74 | 80.89 | ND | 24.53 | 12.91 |
| | 170°C, 2h | 54.55 | 62.39 | 71.80 | 79.71 | ND | 25.16 | 11.16 |
| | 190°C, 1h | 53.47 | 56.21 | 69.39 | 77.09 | ND | 23.62 | 10.05 |
| Waxy rice, Source 1 | Native | ND* | 60.57 | 66.17 | 74.96 | ND | 14.39 | 14.32 |
| | 170°C, 1h | ND | 56.40 | 64.57 | 71.45 | ND | 15.05 | 10.53 |
| | 170°C, 2h | ND | 55.10 | 62.52 | 69.56 | ND | 14.46 | 10.48 |
| | 190°C, 1h | ND | 49.51 | 58.12 | 64.47 | ND | 14.96 | 8.79 |
| | 2h crosslinking (mild) | ND | 61.03 | 68.61 | 74.67 | ND | 13.64 | 13.76 |
| | 4h crosslinking (medium) | ND | 60.94 | 68.57 | 74.37 | ND | 13.43 | 12.80 |
| | 6h crosslinking (high) | ND | 60.99 | 68.58 | 74.34 | ND | 13.35 | 13.86 |
| Waxy rice, Source 2 | Native | ND | 64.43 | 72. 56 | 85.15 | 93.18 | 28.75 | 14.55 |
| | 170°C, 1h | ND | 60.99 | 69.07 | 75.79 | 83.79 | 22.80 | 13.61 |
| | 170°C, 2h | ND | 57.47 | 65.87 | 73.72 | 81.52 | 24.05 | 12.93 |
| | 190°C, 1h | ND | 51.09 | 60.43 | 69.24 | 78.18 | 27.09 | 11.24 |

| | | | | | | | | |
|---|---|---|---|---|---|---|---|---|
| *ND = not detected | | | | | | | | |

In general, the gelatinization temperature was decreased with the increase in the dry-roasting temperature or time (Table 6), which agrees with the trend of the pasting temperature observed using RVA (Figs. 1-6).

The Δ*H* was also decreased with the increase in the dry-roasting temperature or time, indicating that dry-roasting treatment might have disrupted the alignment of the crystallites, making them less perfect and/or less stable.

In addition, the ranges of the gelatinization temperature of dry-roasted starches were either similar to or became slightly narrower than those of their native counterparts.

These results are different from the effects of annealing and heat-moisture treatment (HMT).

Annealing normally results in higher gelatinization temperature, while HMT in the wider range of gelatinization temperature.

In addition, the thermal properties of the chemically crosslinked waxy maize starch were similar to those of its native counterpart (Table 6).

### Example 3. Dry-roasted waxy and normal rice flours.

### Flour materials

- Normal rice flour from Eaglobe Co., Ltd., China. A product of Thailand.
- Glutinous or waxy rice flour from Eaglobe Co., Ltd., China. A product of Thailand.

### Dry roasting

Without any pretreatment or pH adjustment, normal or waxy rice flour (25 g) was placed on an aluminum pan, and heated at 170°C for 1 or 2 h or at 190°C for 1 h.

### Pasting properties in demineralized water

The method was the same as in Example 1 above.

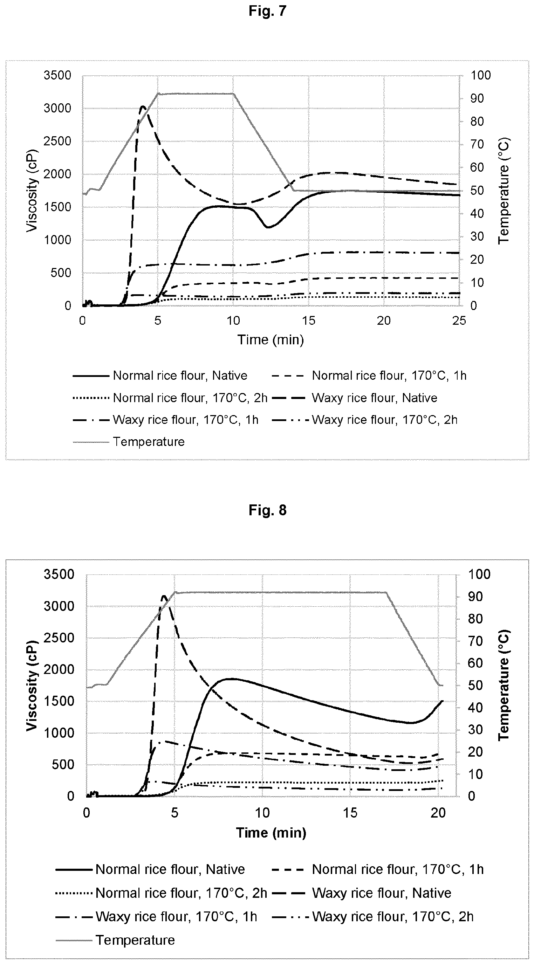

The pasting properties of dry-roasted normal and waxy rice flours in demineralized water are presented in Fig. 7.

The dry-roasted waxy rice flours did not show a clear peak viscosity, which was very different to their native counterpart. In addition, the overall pasting viscosities of normal and waxy rice flours were decreased rapidly by the dry-roasting treatment due to thermal degradation.

### Pasting properties in citric acid solution

The method was the same as in Example 1 above.

The pasting properties of dry-roasted normal and waxy rice flours in citric acid solution are presented in Fig. 8.

The dry-roasted normal and waxy rice flours had lower overall pasting viscosities than their native counterparts.

However, the decrease of the pasting viscosity during the heating from 50°C to 92°C and during the isothermal heating at 92°C was at a slower rate for the dry-roasted waxy rice flours than for the native waxy rice flour, and the dry-roasted normal rice flours did not show an obvious decrease of the pasting viscosity during the analysis.

The results indicated that the acid resistance of the normal and waxy rice flours was increased (thermal inhibition) by the dry-roasting treatment despite the apparent thermal degradation. However, the thermal inhibition effect was less evident than that observed from the normal and waxy rice starches in Example 1.

### Sedimentation test

The method was the same as in Example 1 above. The results are summarized in Table 7.

**Table 7. Sedimentation volumes of dry-roasted normal and waxy rice flours.**

| Botanical origin | Treatment | Sedimentation volume (%) |
|---|---|---|
| Normal rice flour | Native | 61% |
| | 170°C, 1h | 41% |
| | 170°C, 2h | 26% |
| Waxy rice flour | Native | 48% |
| | 170°C, 1h | 24% |
| | 170°C, 2h | 16% |

Different from the native waxy and normal rice starches in Example 1, both native waxy and normal rice flours showed some sedimentation with clear solution on the top.

This could be attributed to the presence of proteins and cell walls that prevented the starch granules to be completely swollen and disintegrated during the heating process.

The sedimentation volume became smaller after the dry-roasting treatment and it was decreased with the increase in the heating time, suggesting a stronger thermal inhibition (Table 7).

### Example 4. Dry-roasted starches from various botanical origins.

### Starch materials

- Pea starch from Roquette Frères, France.
- Tapioca starch from Banpong Tapioca, Thailand.
- Potato starch from Roquette Frères, France.
- Normal Maize starch Roquette Frères, France.
- Waxy Maize starch Roquette Frères, France.

### Dry roasting

Without any pretreatment or pH adjustment, native pea, tapioca, or potato starch (20 g) was placed on an aluminum pan, and heated at 150°C, 170°C, or 190°C for 1 h.

Without any pretreatment or pH adjustment, native waxy or normal maize starch (25 g)was placed on an aluminum pan, and heated at 170°C for 1 or 2 h or at 190°C for 1 h.

### Pasting properties in demineralized water

The method was the same as in Example 1 above.

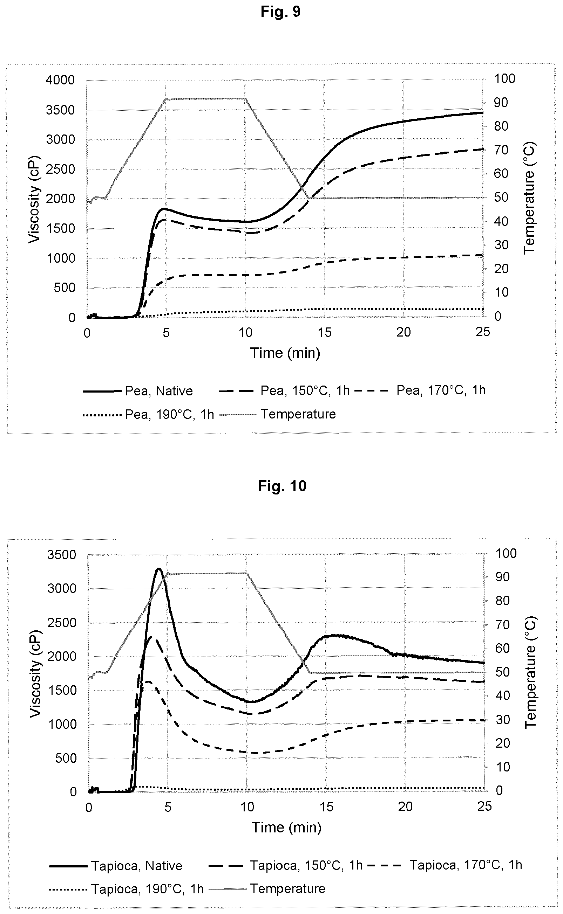

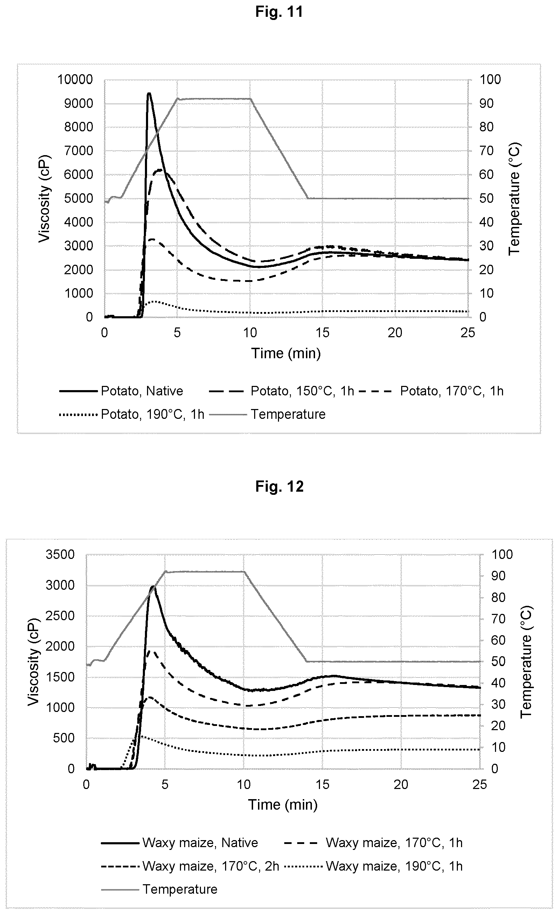

The pasting curves of the dry-roasted starches from various botanical origins in demineralized water are presented in the Figs. 9 to 13.

In general, all starches from various botanical origins experienced a decrease in the peak viscosity after dry-roasting treatment, which was more evident after being dry-roasted at a higher temperature or for a longer time (Figs. 9 - 13), indicating the phenomenon of thermal degradation.

However, the potato starch that was dry-roasted at 150°C for 1 h showed slightly higher pasting viscosity during the holding at 92°C and during the cooling from 92°C to 50°C than its native counterpart, signifying improved viscosity stability during heating and shearing.

### Pasting properties in citric acid solution

The method was the same as in Example 1 above.

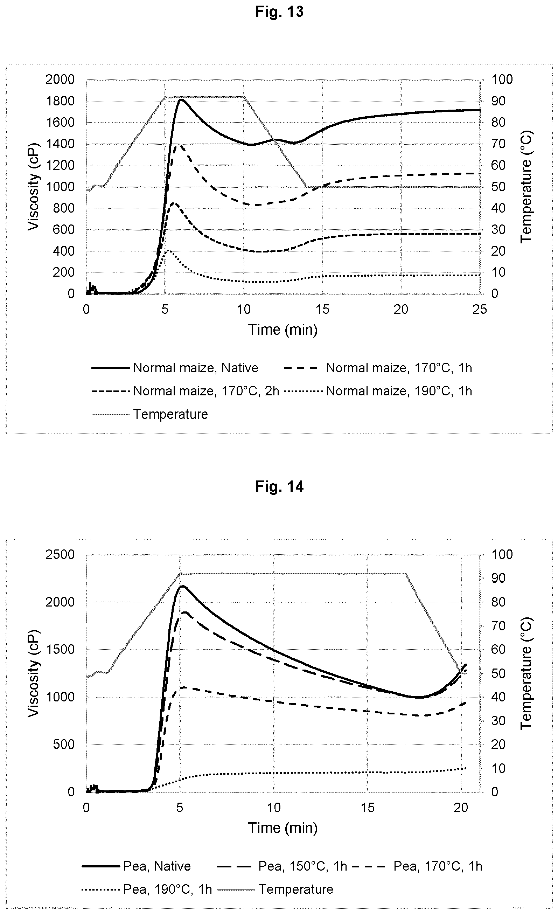

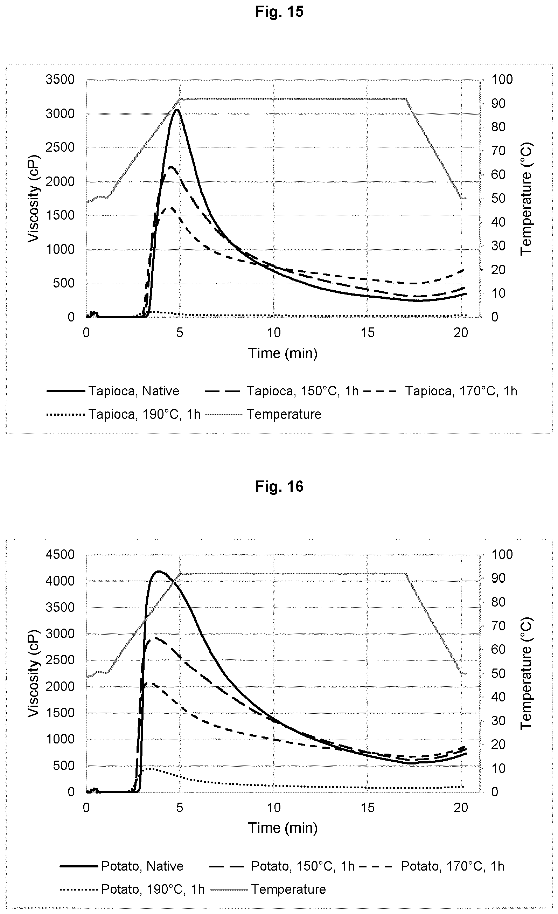

The pasting curves of the dry-roasted starches from various botanical origins in citric solution are presented in the Figs. 14-18.

The pasting properties of these different dry-roasted starches in citric solution are given in Table 8.

**Table 8. Pasting properties of dry-roasted starches from various botanical origins in citric acid solution.**

| Botanical origin | Treatment | Peak viscosity (cP) | Trough (cP) | Breakdown (cP) | Ratio¹ |
|---|---|---|---|---|---|
| Pea | Native | 2170 | 999 | 1171 | 46% |
| | 150°C, 1h | 1897 | 996 | 901 | 53% |
| | 170°C, 1h | 1107 | 809 | 298 | 73% |
| | 190°C, 1h | No peak | No trough | Less than 0 | / |
| Tapioca | Native | 3056 | 243 | 2813 | 8% |
| | 150°C, 1h | 2218 | 311 | 1907 | 14% |
| | 170°C, 1h | 1626 | 501 | 1125 | 31% |
| | 190°C, 1h | 93 | 22 | 71 | 24% |
| Potato | Native | 4184 | 547 | 3637 | 13% |
| | 150°C, 1h | 2930 | 618 | 2312 | 21% |
| | 170°C, 1h | 2084 | 678 | 1406 | 33% |
| | 190°C, 1h | 447 | 81 | 366 | 18% |
| Waxy maize | Native | 2674 | 255 | 2419 | 10% |
| | 170°C, 1h | 1547 | 494 | 1053 | 32% |
| | 170°C, 2h | 843 | 351 | 492 | 42% |
| | 190°C, 1h | 382 | 109 | 273 | 29% |
| Normal maize | Native | 1844 | 941 | 903 | 51% |
| | 170°C, 1h | 1432 | 614 | 818 | 43% |
| | 170°C, 2h | 885 | 292 | 593 | 33% |
| | 190°C, 1h | 481 | 91 | 390 | 19% |

| | | | | | |
|---|---|---|---|---|---|
| ¹Ratio = Trough/Peak viscosity | | | | | |

Except for the dry-roasted normal maize starches, all dry-roasted starches from other botanical origins, in general, showed lower breakdowns and higher ratios of trough to peak viscosity than their native counterparts when they were heated in citric acid solution, indicating a stronger resistance against the acidic pH during heating due to thermal inhibition (Figs. 14-18 and Table 8).

Both peak viscosity and breakdown were decreased with the increases in the temperature and the time of dry-roasting treatment. In fact, the pea starch dry-roasted at 190°C for 1h was lack of peak viscosity and trough, and hence no breakdown was observed, signifying a high resistance to acidic pH.

On the other hand, there was a parabolic trend between the ratio of trough to peak viscosity and dry-roasting temperature for some starches, where it was increased after dry-roasting up to 170°C, but decreased at higher temperature (190°C).

The latter might be due to the stronger thermal degradation than thermal inhibition.

The effects of dry-roasting treatment on pea, tapioca, potato, and waxy maize starches were similar to those observed from normal and waxy rice starches in Example 1, except that the thermal inhibition was more obvious on the normal and waxy rice starches, especially at high dry-roasting temperature.

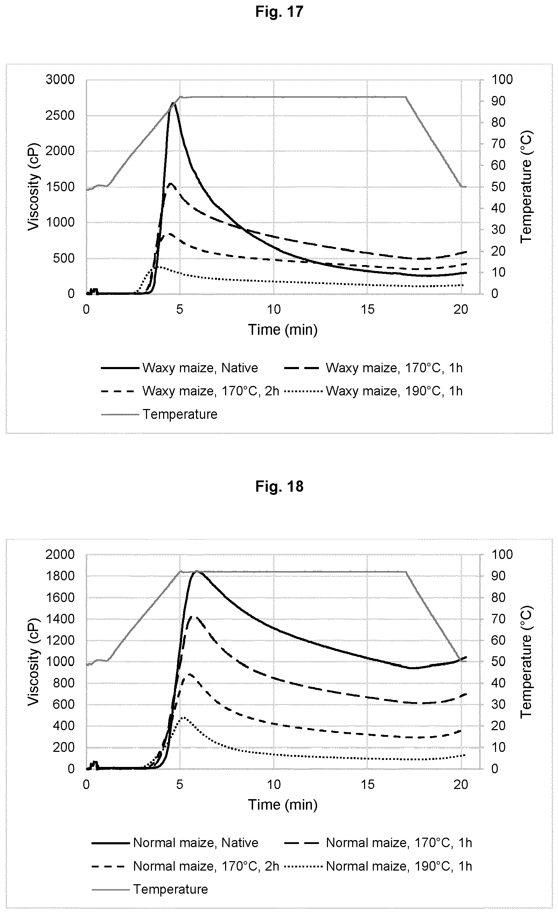

The thermal degradation was more obvious on normal maize starch where the overall pasting viscosity in citric acid solution was decreased after dry-roasting treatment without any changes on the shape of the pasting curve (Fig. 18 and Table 8).

The ratio of trough to peak viscosity of normal maize starch was also decreased after the dry-roasting behavior, confirming that the decrease in the breakdown was not due to the increased acid resistance, but rather due to the decrease in the pasting viscosity caused by thermal degradation.

## Claims

1. A process for producing a heat-modified rice starch having heat, acid and shear resistances and of stabilized viscosity comprising the steps consisting of heating rice starch to a temperature of between 150 and 200° C, preferably at 170 °C for a residence time of between 0.5 h and 6 hours, more preferentially of between 1 and 2 hours.

2. Process according to claim 1, **characterized in that** the rice starch is waxy rice starch.

3. Process according to claim 1, **characterized in that** the rice starch is normal rice starch.

4. Process according to any preceding claims, **characterized in that** the heat-modified rice starch presents increased ratio of trough to peak viscosity during heating in demineralized water, comparing with those of their native counterparts.

5. Process according to claim 4, **characterized in that** the ratio of trough to peak viscosity is more than 60%, more preferably more than 70 % and even more than 80 %.

6. Process according to any preceding claims, **characterized in that** the heat-modified rice starch presents increased ratio of trough to peak viscosity during heating in in citric acid solution, comparing with those of their native counterparts.

7. Process according to claim 6, **characterized in that** the ratio of trough to peak viscosity is more than 50%, more preferably more than 65 % and even more than 80 %.

8. A thickener or texturing agent in food applications, notably in yogurt, ketchup, salad dressings, sauces, comprising the heat-modified starch made by the process according to claim 1.
